(19) Europäisches Patentamt / European Patent Office / Office européen des brevets

(11) **EP 3 058 336 B1**

(12) **FASCICULE DE BREVET EUROPEEN**

(45) Date de publication et mention
de la délivrance du brevet:
**23.08.2017   Bulletin 2017/34**

(51) Int Cl.:
*G01N 15/10* *(2006.01)*        *G01N 15/04* *(2006.01)*
*G01N 15/00* *(2006.01)*        *G01N 21/59* *(2006.01)*

(21) Numéro de dépôt: **14796234.4**

(22) Date de dépôt: **16.10.2014**

(86) Numéro de dépôt international:
**PCT/FR2014/052646**

(87) Numéro de publication internationale:
**WO 2015/055963 (23.04.2015 Gazette 2015/16)**

(54) **UNITÉ DE MESURE DE LA VITESSE DE CHUTE DE PARTICULES EN SUSPENSION DANS UN FLUIDE ET DISPOSITIF COMPRENANT AU MOINS UNE UNITÉ DE MESURE ET UN PRÉLEVEUR AUTOMATIQUE**

EINHEIT ZUR MESSUNG DER SEDIMENTATIONSGESCHWINDIGKEIT VON PARTIKELN IN SUSPENSION IN EINEM FLUID UND VORRICHTUNG MIT MINDESTENS EINER DERARTIGEN EINHEIT UND EINEM AUTOMATISCHEN PROBENNEHMER

UNIT FOR MEASURING THE SETTLING VELOCITY OF PARTICLES IN SUSPENSION IN A FLUID AND DEVICE COMPRISING AT LEAST SAID UNIT AND AN AUTOMATIC SAMPLER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **18.10.2013   FR 1360167**

(43) Date de publication de la demande:
**24.08.2016   Bulletin 2016/34**

(73) Titulaires:
• **Institut De Recherche Pour Le Développement (IRD)**
  **13002 Marseille 2 (FR)**
• **Université Grenoble Alpes**
  **38400 Saint-Martin-d'Hères (FR)**

(72) Inventeurs:
• **GRATIOT, Nicolas**
  **F-38000 Grenoble (FR)**
• **MERCIER, Bernard**
  **F-38120 Saint-Egreve (FR)**
• **LEGOUT, Cédric**
  **F-38410 Saint Martin d'Uriage (FR)**
• **WENDLING, Valentin**
  **F-67600 Selestat (FR)**
• **COULAUD, Catherine**
  **F-38700 La Tronche (FR)**
• **MORA, Henri**
  **F-38140 Renage (FR)**

(74) Mandataire: **Cabinet Plasseraud**
  **66, rue de la Chaussée d'Antin**
  **75440 Paris Cedex 09 (FR)**

(56) Documents cités:
**GB-A- 2 204 949      US-A- 4 793 706**

• **MANTOVANELLI A ET AL: "Devices to measure settling velocities of cohesive sediment aggregates: A review of the in situ technology", JOURNAL OF SEA RESEARCH, ELSEVIER, AMSTERDAM, NL, vol. 56, no. 3, 17 juin 2006 (2006-06-17), pages 199-226, XP028035755, ISSN: 1385-1101, DOI: 10.1016/J.SEARES.2006.05.002 [extrait le 2006-10-01]**

**Description**

L'invention a trait au domaine des dispositifs pour mesurer la vitesse de chutes des particules dans un fluide, tels que les sédiments dans l'eau. Plus particulièrement, l'invention propose de s'intéresser au phénomène de floculation des particules.

Les abords des cours d'eau sont des lieux privilégiés pour l'implantation des activités humaines. Leur mécanisme de sédimentation revêt donc un intérêt particulier. En effet, la sédimentation peut amener un cours d'eau à modifier sa trajectoire, voire à se boucher. Il est donc important de connaître son influence sur un cours d'eau, afin par exemple de choisir au mieux le lieu l'implantation d'activités humaines, ou pour pouvoir prendre des décisions concernant l'aménagement. La sédimentation peut également stocker des polluants, fixés aux particules piégées, dans des zones indésirables.

Les sédiments sont transportés par les cours d'eau sur plusieurs kilomètres. Ils proviennent par exemple de l'érosion des versants et/ou des apports en matières organiques. Puis, ils se déposent dans des endroits où les eaux sont plus calmes, par exemple dans les estuaires (on parle alors d'envasement). Les concentrations en sédiments dépassent fréquemment 1 g/L notamment pendant les crues, et peuvent atteindre jusqu'à plusieurs centaines de grammes par litre pour les rivières de montagne, notamment à cause du phénomène d'érosion particulièrement intense.

Le rôle de la vitesse de chute des sédiments est un facteur clé pour comprendre et modéliser la dynamique de transport des sédiments dans les cours d'eau. En effet, la vitesse de chute des sédiments influe sur la façon dont les sédiments sont transportés.

La vitesse de chute est influencée par la taille des sédiments. Il est d'ailleurs possible de déduire, à partir de la mesure de certaines caractéristiques des particules telles que leur taille et / ou leur concentration dans le fluide, leur vitesse de chute dans le fluide grâce, par exemple, à la relation de Stoke.

Il existe différentes techniques pour mesurer, en laboratoire, certaines caractéristiques de particules en suspension dans un fluide, tel que les mesures au tube d'Owen ou encore à la pipette d'Andreasen.

Le document US 4,696,571 décrit un exemple de dispositif permettant de mesurer la masse et la taille de particules en suspension dans un liquide. Le dispositif comprend un laser dirigé vers un échantillon, lequel est retenu dans une cellule de forme allongée. Un détecteur détecte la lumière émise par le laser et diffusée par l'échantillon. Le laser est positionné près du fond de la cellule. L'échantillon est secoué et les mesures de diffusion sont enregistrées au fur et à mesure que les particules tombent au fond.

Ces techniques sont mises en oeuvre en laboratoire. Des échantillons sont prélevés in situ, puis stockés dans des réceptacles pour pouvoir être transportés. Éventuellement, les prélèvements doivent être traités préalablement au transport et au stockage. Puis, les échantillons subissent de nouveau un traitement pour l'analyse. En particulier, les prélèvements sont séchés pour le transport et le stockage, puis dilués pour les analyses en laboratoire.

Les prélèvements peuvent être dégradés par le séchage, faussant les analyses. En outre, le grand nombre d'étapes rend ces techniques fastidieuses à mettre en oeuvre et coûteuses. De même, la dilution provoque une perte de l'information sur le milieu à analyser.

De plus, les techniques classiques sont limitées dès que les concentrations en sédiments dépassent le gramme par litre. Or, en particulier dans les milieux montagneux, les concentrations en sédiments sont très élevées, atteignant parfois plusieurs centaines de grammes par litre. Les techniques classiques utilisant un laser ne permettent pas d'effectuer des analyses à de telles concentrations.

Des dispositifs de type néphélomètres pour mesurer la turbidité d'un fluide in situ existent également. Le document US 3,364,812 décrit un exemple de ce type de dispositif, qui comprend un réservoir muni d'un couvercle ouvert sur lequel est fixé un logement pour un système d'éclairage. Une entrée d'eau est prévue près du fond du réservoir pour permettre un flux continu d'eau vers une sortie, à un niveau dans le réservoir constant. La surface de l'eau dans le réservoir peut alors être éclairée par le système d'éclairage au travers de l'ouverture du couvercle. Une partie du faisceau lumineux est absorbé par l'eau et une partie est réfléchie vers des moyens de calibrations. La lumière diffusée par l'eau, à environ 90°, est recueillie par un photomultiplicateur afin d'effectuer la mesure de turbidité. La turbidité est ainsi mesurée en continue.

Les mesures de turbidité décrites, intégrant un grand volume de mesure, permettent de déduire par exemple la concentration en particules. Mais ils ne permettent pas d'obtenir la vitesse de chute des particules.

En outre, la taille des sédiments varie à cause du phénomène de floculation.

« Floculation » est un terme utilisé notamment dans le domaine de traitement de l'eau pour désigner un phénomène au cours duquel des particules fines en suspension dans un liquide s'agglomèrent pour former des particules de tailles plus importantes, appelés flocs.

La floculation revêt une importance particulière pour l'étude de la sédimentation des bassins fluviaux, puisqu'elle influe leur vitesse de chute. Plus le phénomène de floculation est important, plus la taille des particules varie, et ainsi leur vitesse. La floculation revêt également une importance particulière pour le transport des polluants. Les particules les plus floculantes (telles que les argiles), c'est-à-dire dont la capacité à floculer est importante, ont une capacité d'adsorption des polluants et nutriments bien plus importante que les particules non floculantes (telles que les sables).

Les techniques avec prélèvement in situ, transport puis analyse en laboratoire permettent mal de quantifier le phénomène de floculation d'un échantillon. En effet, ces techniques impliquant le séchage des prélèvements et / ou leur dilution modifient les particules par rapport à leur état dans le milieu d'origine, pouvant masquer le phénomène de floculation ayant lieu dans ce milieu.

Les dispositifs de mesure de type néphélomètres ne permettent que de déterminer une vitesse de chute moyenne, puisqu'ils partent de l'hypothèse que la taille des particules ne varie pas, et donc que la vitesse de chute est constante.

Un dispositif appelé SediMeter ® permet de mesurer in situ la vitesse de chute des sédiments en mesurant directement les variations de hauteur de la couche de sédiments. Le SediMeter ® se présente sous la forme d'une tige munie de capteurs, une extrémité étant plantée dans la couche de sédiment au fond du cours d'eau et l'autre extrémité étant dans l'eau.

Toutefois, ce dispositif ne permet pas d'obtenir des informations sur les particules, telles que leur nature, leur taille ou leur concentration. En outre, ce dispositif est fastidieux à mettre en place, notamment dans un cours d'eau de grande profondeur. De plus, il peut être arraché en cas de forts courants. Le document GB 2 204 949 A divulgue un dispositif pour analyser la sédimentation de particules en suspension dans un liquide. Le dispositif comprend une colonne de sédimentation transparente pour contenir un échantillon du liquide et une pluralité de diodes électroluminescentes disposées le long de la colonne et une pluralité correspondante de photodétecteurs opposés aux diodes électroluminescentes, les axes optiques étant perpendiculaires à l'axe longitudinal de la colonne. Les diodes électroluminescentes et les photodétecteurs sont fixés dans des boîtiers en aluminium supportés par rapport à la colonne par un dispositif de fixation.

Par conséquent, il existe un besoin pour un nouveau dispositif de terrain permettant de mesurer la vitesse de chute de particules en suspension dans un fluide, en tenant compte du phénomène de floculation.

Un premier objet de l'invention est de proposer un dispositif de mesure de la vitesse de chute de particules pouvant être mis en oeuvre sur le terrain et permettant de rendre compte du phénomène de floculation des particules.

Un deuxième objet est de proposer un dispositif de mesure de la vitesse de chute de particules peu coûteux.

Un troisième objet est de proposer un dispositif de mesure de la vitesse de chute de particules permettant d'obtenir des données fiables.

Un quatrième objet est de proposer un dispositif de mesure de la vitesse de chute de particules permettant de mesurer la vitesse de chute de sédiments dans les milieux atteignant, à forte concentration, plusieurs dizaines voire centaines de grammes par litre.

Un cinquième objet est de proposer un dispositif de mesure de la vitesse de chute de particules permettant d'effectuer des mesures aisément, à l'extérieur, par exemple à côté d'un cours d'eau, sur des durées allant jusqu'à plusieurs jours, et de pouvoir déplacer le dispositif facilement.

A cet effet, selon un premier aspect, l'invention propose une unité de mesure de la vitesse de chute de particules en suspension dans un fluide d'une source. L'unité comprend notamment :

- une enceinte étanche présentant une ouverture, l'enceinte définissant un compartiment ouvert qui comprend l'ouverture et un compartiment étanche, des moyens d'étanchéité séparant le compartiment ouvert du compartiment étanche, le compartiment ouvert étant destiné à contenir un échantillon du fluide à analyser ;
- des moyens de mesure de la vitesse de chute des particules de l'échantillon dans le compartiment ouvert, lesdits moyens de mesure étant placés dans le compartiment étanche de l'enceinte.

Lesdits moyens de mesure sont de type optique et comprennent notamment :

- au moins trois émetteurs d'un rayonnement électromagnétique, les émetteurs étant répartis selon un axe longitudinal du compartiment ouvert, chaque émetteur étant orienté selon un axe de rayonnement croisant le compartiment ouvert à des hauteurs différentes selon l"axe longitudinal sur le compartiment ouvert ;
- des récepteurs, dont le nombre est égal au nombre d'émetteurs et qui sont répartis selon l'axe longitudinal, chaque récepteur étant placé dans l'axe de rayonnement d'un émetteur, de manière à recevoir le rayonnement de l'émetteur correspondant après traversée du compartiment ouvert ;
- des moyens de commandes des émetteurs et des récepteurs ;
- un système d'acquisition des données relié aux récepteurs pour recueillir les données des mesures effectuées,

Les données acquises permettent ainsi d'obtenir la vitesse de chute des particules et son évolution en fonction de la hauteur dans le compartiment ouvert et en fonction du temps, ladite évolution quantifiant une floculation des particules. L'unité de mesure ainsi formée permet alors de fournir aux opérateurs de terrain un équipement opérationnel in situ, robuste et complet. L'unité permet d'obtenir des mesures fiables, sans passer nécessairement en laboratoire.

L'unité de mesure présente également les caractéristiques suivantes, considérées seules ou en combinaison :

- les données acquises par les moyens de mesure sont une mesure de l'absorbance du rayonnement émis par les émetteurs et reçu par chaque récepteur ;
- les émetteurs sont de type diode électroluminescente ;
- le rayonnement a une longueur d'onde comprise dans l'infrarouge.la distance longitudinale entre l'axe de rayonnement de deux émetteurs successifs et adjacents est au plus de 5 cm ;
- la distance longitudinale entre l'axe de rayonnement de deux émetteurs successifs et adjacents est de 1 cm ;
- le compartiment ouvert est formé par un réservoir introduit dans l'enceinte, les moyens d'étanchéité étant placés entre le réservoir et l'enceinte ;
- le fond de l'enceinte est amovible ;
- l'unité de mesure comprend des moyens de vidange du compartiment ouvert de la au moins une unité de mesure ;
- l'unité de mesure comprend un connecteur électrique disponible à l'extérieur de l'enceinte, apte à communiquer avec une centrale de récupération et de traitement des données.

Selon un deuxième aspect, l'invention concerne un dispositif de mesure de la vitesse de chute de particules en suspension dans un fluide d'une source. Le dispositif comprend :

- au moins une unité de mesure telle que présentée ci-dessus ;
- un préleveur de type automatique comprenant une entrée de fluide apte à être en connexion fluidique avec la source de fluide et une sortie de fluide en connexion fluidique avec le compartiment ouvert de l'enceinte de la au moins une unité de mesure.

En pratique, le dispositif comprend une pluralité d'unités de mesure. Le préleveur peut être en connexion fluidique avec le compartiment ouvert d'une unité de mesure à la fois. Le préleveur comprend alors des moyens pour se déplacer et être en connexion fluidique avec le compartiment ouvert d'au moins une autre unité de mesure, les moyens de commande du préleveur permettant de commander le remplissage du compartiment ouvert de l'une ou l'autre des unités de mesure. En variante, le préleveur peut être en connexion fluidique simultanément avec les compartiments ouverts plusieurs des unités de mesure, les moyens de commande pouvant commander le remplissage simultané des compartiments ouverts.

Le dispositif comprend par exemple un bac formant réceptacle pour la pluralité d'unités de mesure, le préleveur étant en connexion fluidique le compartiment ouvert de chacune des unités de mesure.

Selon un troisième aspect, l'invention propose une application d'une unité de mesure telle que présentée ci-dessus, dans laquelle le fluide est de l'eau et les particules sont des sédiments.

Bien entendu, d'autres avantages et caractéristiques de l'invention apparaîtront à l'examen de la description détaillée d'exemples possibles de réalisation, présentée ci-après, et des figures ci-annexées sur lesquelles :

- la figure 1 est une vue de côté d'un exemple de réalisation d'une unité de mesure pour un dispositif de mesure de la vitesse de chute de particules en suspension dans un fluide, l'unité comprenant une enceinte ;

- la figure 2 est une vue de dessus de l'unité de la figure 1 ;

- la figure 3a est une vue de côté de l'unité de la figure 1 dépourvue de l'enceinte ;

- la figure 3b est une vue de face de l'unité de la figure 1 dépourvue de l'enceinte ;

- la figure 4 est une vue de l'enceinte seule de l'unité de la figure 1 ;

- la figure 5 est une vue en coupe V-V de l'unité de la figure 2 ;

- la figure 6 est une vue en coupe VI-VI de l'unité de la figure 1 ;

- la figure 7 est un schéma illustrant une réalisation de l'ensemble de l'électronique de l'unité de mesure des figures précédentes ;

- la figure 8 est une vue de dessus d'un exemple de réalisation du dispositif de mesure comprenant une pluralité d'unités de mesure illustrées sur les figures 1 à 6;

- la figure 9 est un chronogramme illustrant la commande des émetteurs de l'unité des figures 1 à 6 ;

- la figure 10 est un ensemble de courbes représentant des résultats obtenus grâce à l'unité de mesure des figures 1 à 6 sur un échantillon comprenant des particules sujettes au phénomène de floculation ;

- la figure 11 est un ensemble de courbes similaire à celui de la figure 10, pour un échantillon contenant des particules non sujettes, ou peu, au phénomène de floculation,

- la figure 12 est une représentation schématique d'une unique courbe tirée du schéma de la figure 10.

Le dispositif **1** selon l'invention comprend notamment au moins une unité **2** de mesure de la vitesse de chute de particules en suspension dans un échantillon **3** d'un fluide d'une source. Le dispositif 1 comprend par ailleurs un préleveur **4,** de type automatique, adapté au terrain, au sein duquel est placée l'unité 2 de mesure. En pratique, et comme cela sera explicité plus loin, le dispositif 1 comprend une pluralité d'unités 2 de mesure placées dans le préleveur 4. Des moyens de commande du préleveur sont prévus à cet effet. Le préleveur 4 comprend un système **5** d'approvisionnement permettant de transporter un échantillon de fluide prélevé sur le terrain jusqu'à l'unité 2 de mesure.

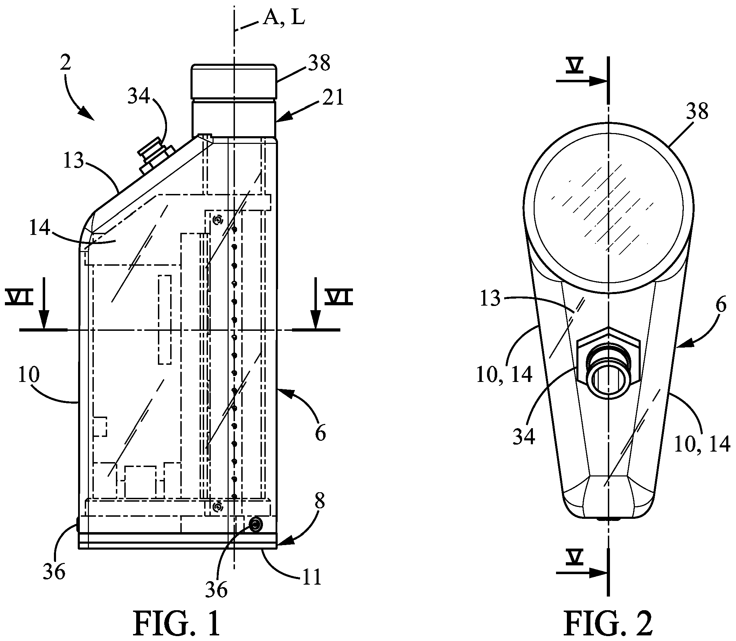

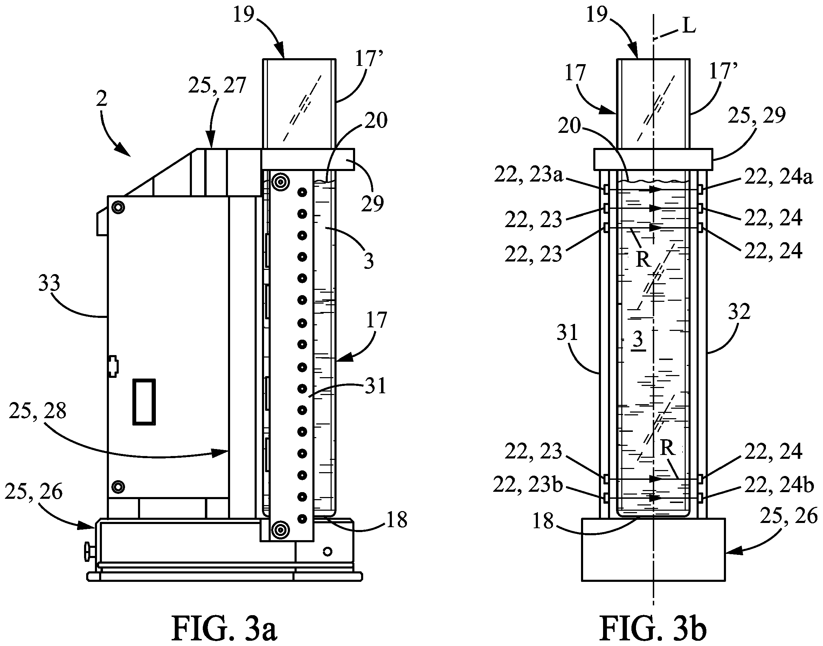

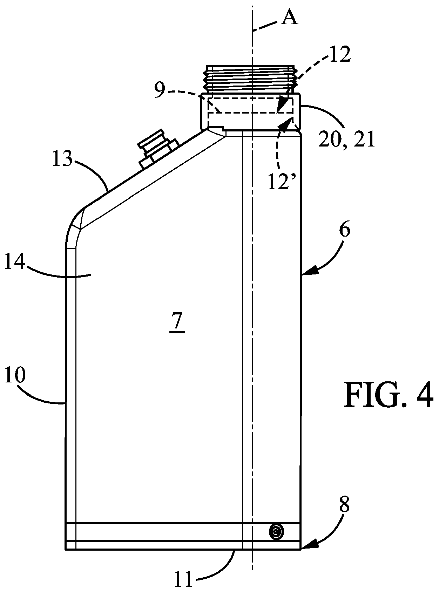

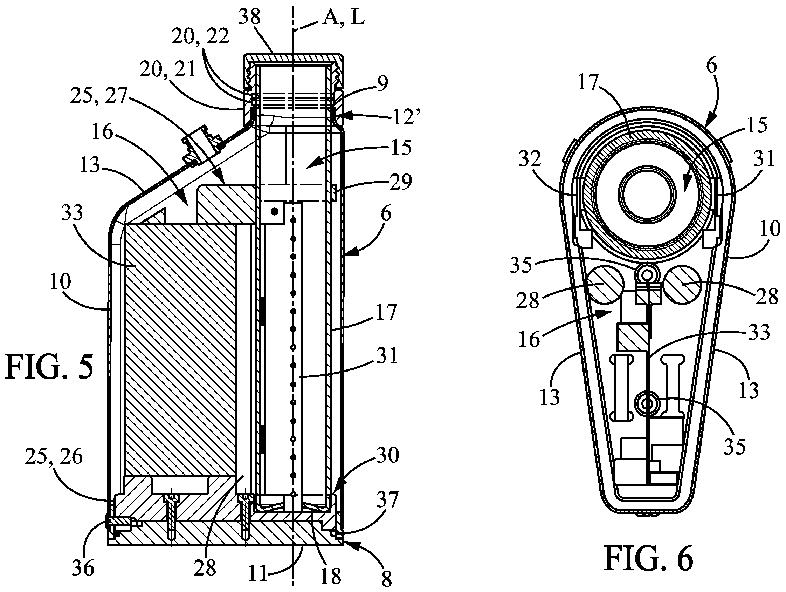

Il est représenté, sur les figures 1 à 6, un exemple de réalisation d'une unité 2 de mesure.

L'unité 2 de mesure comprend une enceinte **6** étanche, définissant un volume **7** intérieur. Par exemple, l'enceinte 6 peut se présenter sous la forme d'un récipient ou bouteille, et être réalisée dans une matière thermoplastique. L'enceinte 6 est de préférence opaque, c'est-à-dire qu'elle filtre une partie de la lumière visible. Elle est étanche notamment à l'eau.

Plus précisément, l'enceinte 6 est délimitée, selon un axe A principal, par une extrémité **8** distale et une extrémité **9** proximale. Les adjectifs « distal » et « proximal » sont pris ici en référence au système 5 d'approvisionnement en échantillon du préleveur 4. Ainsi, l'extrémité 9 proximale est plus proche du système 5 d'approvisionnement du préleveur 4 que l'extrémité 8 distale.

Par ailleurs, dans ce qui suit, les termes et expression « supérieur », « inférieur », « au-dessus », « sur », « au-dessous », « sous », etc. doivent être compris ici en référence à l'orientation naturelle des figures.

L'enceinte 6 est délimitée par une paroi **10** latérale, s'étendant sensiblement selon l'axe A principale, et est fermée à son extrémité 8 distale par un fond **11**. L'extrémité 9 proximale présente une ouverture **12** donnant accès au volume 7 intérieur de l'enceinte 6. Plus précisément, la paroi 10 latérale forme à l'extrémité 9 proximale une surface **13** supérieure qui est surmontée d'un col **12'** formant l'ouverture 12. Comme il sera vu plus loin, le fond 11 de l'enceinte 6 est amovible.

Selon un exemple, la paroi 10 latérale de l'enceinte 6 comprend deux flancs **14,** s'étendant sensiblement parallèlement à l'axe A principale, et inclinés l'un par rapport à l'autre dans un plan perpendiculaire à l'axe A d'extension. L'enceinte 6 présente ainsi, vu dans un plan perpendiculaire à l'axe A d'extension, une forme en secteur.

Au moins deux compartiments sont formés dans le volume 7 intérieur de l'enceinte 6. Un premier compartiment **15** est dit ouvert car il comprend l'ouverture 12 de l'enceinte 6, de sorte que ce compartiment 8 ouvert est accessible par l'ouverture 12. Le deuxième compartiment **16** est dit étanche car il est séparé de manière étanche de l'ouverture 12.

Selon un mode de réalisation qui est celui des figures, le compartiment 15 ouvert est formé par l'introduction dans l'enceinte 6 d'un réservoir **17**. Le réservoir 17 se présente par exemple sous la forme d'une colonne s'étendant selon un axe L longitudinal, fermée à par un fond **18** à l'extrémité distale et présentant une ouverture **19** à l'extrémité proximale. Par exemple, le réservoir 17 est réalisé en verre ou en plexiglas ou tout autre matériau transparent à la lumière visible et infrarouge. Il se présente de préférence sous la forme d'un tube, cylindrique à base circulaire, de sorte que la surface latérale cylindrique du réservoir 17 ne présente pas de coin ou autre discontinuité. Toutefois, la forme du réservoir 17 n'est pas limitée à la forme cylindrique. Par exemple, de manière avantageuse, la forme du réservoir 17 est adaptée pour épouser au mieux la forme du volume 7 intérieur de l'enceinte 6.

Aux fins de mesures des vitesses de chute de particules, le réservoir 17 présente une hauteur, c'est-à-dire une dimension selon l'axe L longitudinale, de plusieurs centimètres, de préférence au-delà de 10 cm (centimètres), et par exemple 20 cm, avec un diamètre de 40 mm (millimètres). De manière générale, le volume du compartiment 15 ouvert ne doit pas être trop faible pour pouvoir mettre en évidence le phénomène de floculation, tout en limitant l'encombrement. Il a été déterminé qu'un volume minimum de 100 à 150ml (millilitre) apporte satisfaction pour l'application décrite ici.

Le diamètre extérieur du réservoir 17 est sensiblement égal au diamètre intérieur du col 12' de l'enceinte 6. Le réservoir 17 est alors placé dans l'enceinte 6 de sorte qu'une portion 17' supérieure du réservoir 17 s'étend dans le col 12' et émerge au-delà de l'ouverture 12, à l'extérieur de l'enceinte 6. L'ouverture 19 du récipient est ainsi accessible à l'extérieur de l'enceinte 6.

Des moyens **20** d'étanchéité sont placés entre la portion 17' supérieure du réservoir 17 émergeant hors de l'enceinte 6 et le col 12' de l'enceinte 6.

A cet effet, les moyens d'étanchéité comprennent un manchon **21** rapporté et fixé sur le col 12' de l'enceinte 6 et recouvre la portion 17' supérieure du réservoir 17 tout en laissant l'ouverture 19 du réservoir 17 accessible. Des joints 36 d'étanchéité annulaires sont placés entre le manchon 35 et le réservoir 14.

Ainsi, le réservoir 17 définit le compartiment 15 ouvert, accessible de l'extérieur de l'enceinte 6 par son ouverture 19, et séparé du compartiment 16 étanche par la surface latérale cylindrique du réservoir 17 et les moyens 20 d'étanchéité. Ainsi, pratiquement l'ensemble du volume 7 intérieur correspond au compartiment 16 étanche, le volume défini par le réservoir 17 définissant le compartiment 15 ouvert.

En variante, le compartiment 15 ouvert pourra être réalisé avec l'enceinte 6, de manière monobloc, les moyens 21 d'étanchéité étant formés par exemple en prévoyant une paroi interne à l'enceinte 6, séparant le compartiment 15 ouvert avec l'ouverture 12 de l'enceinte 6 et le compartiment 16 étanche.

Ainsi, le compartiment 16 étanche est inaccessible lorsque le fond 11 de l'enceinte 6 et le manchon 35 sont fixés, protégeant les moyens 17 de mesure de tout contact avec le fluide.

Des moyens **22** de mesure sont placés dans le compartiment 16 étanche de l'enceinte.

Les moyens 22 de mesure sont de type optique et sont de préférence basés sur les mesures par transmission d'un rayonnement électromagnétique. Ils n'ont par conséquent pas de contact physique avec l'échantillon dans la colonne 17.

Selon un mode de réalisation préféré, les moyens 22 de mesure permettent de mesurer l'absorbance d'un rayonnement électromagnétique traversant l'échantillon 3 dans le réservoir 17. A cet effet, les moyens 22 de mesure comprennent au moins une rangée d'au moins trois émetteurs **23,** et de préférence au moins cinq émetteurs 23, répartis longitudinalement, sur toute la hauteur du réservoir 17 et au moins une rangée de récepteurs **24,** répartis de manière similaire, de sorte que chaque récepteur 24 reçoit le rayonnement électromagnétique d'un émetteur 23 correspondant, après traversée du réservoir 17. Les émetteurs 23 et les récepteurs 24 sont placés de part et d'autre du réservoir 17, c'est-à-dire qu'ils ne sont pas plongés dans l'échantillon 3 dans le réservoir 17.

Plus précisément, les moyens 22 de mesure comprennent un bâti **25** formé d'un socle **26** et d'une bride **27.** Le socle 26 et la bride 27 sont décalés l'un par rapport à l'autre selon un axe qui est confondu, lorsque les moyens 22 de mesure sont placés dans l'enceinte 6, à l'axe A d'extension. Le socle 26 et la bride 27 sont reliés rigidement par une ou plusieurs entretoises **28,** formant colonne selon l'axe A d'extension. La bride 27 comprend une portion **29** en forme de collier, de diamètre correspondant à celui du réservoir 17.

Le socle 26 comprend une zone **30** de réception, spécialement conçue pour y placer le fond 16 du réservoir 17. Par exemple, la zone 30 de réception forme un renfoncement dans le socle 26, dont les dimensions correspondent à celles du fond 18 du réservoir 17.

Ainsi, le réservoir 17 peut être placé avec son fond 18 dans la zone 30 de réception de réception du socle 26 et maintenu à une autre hauteur par le collier 29 de la bride 27.

Les moyens 22 de mesure sont disposés en une rangée, par exemple sous forme d'une barrette, d'au moins trois émetteurs **23,** répartis longitudinalement, sur toute la hauteur du réservoir 17, entre le socle 16 et le collier 29 de la bride 27, et en une rangée de récepteurs **24,** répartis de manière similaire, également par exemple sous forme de barrette, de sorte que chaque récepteur 24 reçoit le rayonnement électromagnétique d'un émetteur 23 correspondant, après traversée de l'échantillon 3 dans le réservoir 17.

Plus précisément, chaque émetteur 23 émet un rayonnement électromagnétique orienté selon un axe **R** de rayonnement qui croise le réservoir 17, c'est-à-dire qui n'est pas parallèle à l'axe L longitudinal. L'axe R de rayonnement peut être défini comme étant l'axe sur lequel le faisceau du rayonnement émis est centré. Par exemple, les axes R de rayonnement de chaque émetteur 23 sont perpendiculaires à l'axe longitudinal L. La longueur d'onde du rayonnement électromagnétique des émetteurs 18 est choisie pour traverser la paroi latérale du réservoir 17. Par exemple, on choisira une longueur d'onde voisine de 880 nm (nanomètres), dans l'infrarouge proche.

Les récepteurs 24 sont répartis de manière similaire à celle des émetteurs 23, de sorte que chaque récepteur 24 est apte à recevoir le rayonnement émis par un émetteur 23 lui correspondant, après que le rayonnement a traversé le réservoir 17 selon l'axe R de rayonnement. La rangée de récepteurs 24 est alors par exemple diamétralement opposée à la rangée d'émetteurs 23.

Les moyens 22 de mesure comprennent également des supports **31, 32** pour les émetteurs 23 et pour les récepteurs 24. Plus précisément, un premier support 31 pour les émetteurs 23, se présente sous la forme d'un circuit imprimé. Les émetteurs 23 sont alors par exemple des DEL (diodes électroluminescentes) disposées en ligne sur le circuit imprimé, selon l'axe A d'extension. De même, le deuxième support 32, pour les récepteurs 24, se présente également sous la forme d'un circuit imprimé sur lequel les récepteurs 24, sont disposés en ligne. Les récepteurs 24 sont alors par exemple des phototransistors ou des photodiodes. Les deux supports 31, 32 sont placés entre le socle 26 et la bride 27 du bâti 25, auquel ils sont fixés rigidement par exemple au moyen de visserie. Les deux supports 31, 32 sont disposés, transversalement par rapport à l'axe A d'extension, en vis-à-vis et à distance l'un de l'autre, de sorte qu'un espace transversal pour le réservoir 17 est ménagé entre eux.

Les émetteurs 23 et les récepteurs 24 sont montés sur leur support 31, 32 respectif par la technique dite du montage de surface (CMS) et montage inversé. Plus précisément, chaque support 31, 32 est percé. Chaque émetteur 23 et chaque récepteur 24 sont passés au travers d'un perçage de leur support 31, 32 respectif, de sorte qu'ils affleurent d'un côté du support 31, 32. Les émetteurs 23 et les récepteurs 24 sont fixés sur l'autre côté de leur support 31, 32, par exemple par brasage.

Ainsi, chaque support 31, 32 présente un côté par lequel affleurent les émetteurs 23 ou les récepteurs 24, ce côté pouvant être placé au plus près du réservoir 17, et notamment de sa paroi cylindrique.

Comme il sera explicité plus loin, les émetteurs 23 sont répartis longitudinalement de telle sorte qu'un premier émetteur 23a est placé au plus près du collier 29 et un dernier émetteur 23b est placé au plus près du socle 16. Par « premier émetteur », on entend ici l'émetteur 23a dont l'axe R de rayonnement qui traverse l'échantillon 3 dans le réservoir 17 est le plus proche du collier 29 de la bride 27. Par « dernier émetteur », on entend ici l'émetteur 23b dont l'axe R de rayonnement est le plus proche du socle 26.

Le premier émetteur 23a est alors placé de sorte que l'axe R de rayonnement associé est au plus à 5 cm sous le collier 29. En outre, les émetteurs 23 sont placés à une distance longitudinale les uns des autres inférieure à 5 cm, et de préférence inférieure ou égal à 1 cm. Le réservoir 17 est rempli par l'échantillon 3 de fluide à analyser de telle manière que le niveau maximal de l'échantillon 3 de remplissage corresponde sensiblement au collier 29. De la sorte, même lorsque le niveau maximal d'échantillon n'est pas atteint dans le réservoir 17, il y a toujours un émetteur 23 dont le rayon R de rayonnement sera au plus à 5 cm, et de préférence au plus à 2 cm, sous la surface libre de l'échantillon 3 dans le réservoir 17. De préférence, le premier émetteur 23a a son axe R de rayonnement à une distance longitudinale maximale au plus de 1 cm sous le collier 29. De même, la distance longitudinale entre le socle 16 et le dernier émetteur 23b est au plus de 5 cm, et de préférence au plus de 1 cm.

Ainsi, la quasi-totalité de l'échantillon 3 dans le réservoir 17 est traversé par les rayonnements des émetteurs 23 selon l'axe L longitudinal. Par exemple, la distance entre le premier émetteur 23a et le dernier émetteur 23b représente au moins 80% de la hauteur total de la portion de réservoir entre le collier 29 de la bride 27 et le socle 16.

Les émetteurs 23 sont par exemple du type diode, et émettent des impulsions de rayonnement électromagnétique dont la longueur d'onde correspond à celle pour laquelle le réservoir 17 est transparent. Notamment, le rayonnement peut être dans le domaine de l'infrarouge. L'intensité des impulsions est réglable, par exemple en fonction de la concentration en particules de l'échantillon 3.

Les récepteurs 24 sont alors par exemple de type photodiodes ou phototransistors, et produisent, à partir du rayonnement reçu, un signal de sortie, par exemple un courant ou une tension, dont l'amplitude est proportionnelle à l'intensité du rayonnement reçu.

Ainsi, le rayonnement émis par un émetteur 23 traverse l'échantillon 3 dans le réservoir 17, de sorte que son intensité est affaiblie en fonction des caractéristiques des particules, telles que leur concentration ou leur taille, sur le chemin du rayonnement. Plusieurs phénomènes peuvent être à l'origine de l'affaiblissement de l'intensité du rayonnement, comme l'absorbance ou encore la diffusion.

En effet, le rayonnement électromagnétique est émis en pratique par les émetteurs 23 selon un angle solide d'axe R de rayonnement. En outre, les récepteurs 24 présentent également un angle solide de réception d'axe R de rayonnement. Par conséquent, certaines particules dans l'échantillon 3 qui ne sont pas alignées sur l'axe R de rayonnement peuvent diffuser une partie du rayonnement. Le rayonnement d'un émetteur 23 diffusé peut générer un signal sur des récepteurs 24 qui ne sont pas alignés suivant l'axe R de rayonnement de l'émetteur 23 en question. Afin de s'assurer que le rayonnement électromagnétique reçu par les récepteurs 24 résulte principalement, voire exclusivement, du rayonnement absorbé par les particules dans le réservoir 17, l'angle solide du rayonnement électromagnétique émis par les émetteurs 23 ainsi que l'angle solide des récepteurs 24 doivent être les plus faibles possibles.

Le matériau du réservoir 17 ainsi que sa surface latérale cylindrique permettent de s'assurer que la traversée de l'échantillon par le rayonnement est la cause principale, si ce n'est l'unique, à l'affaiblissement de l'intensité. Le rayonnement affaibli est ensuite reçu par un récepteur 23 correspondant, et transformé en signal caractérisant l'échantillon 3, ou plus précisément caractérisant la tranche de l'échantillon 3 traversée par le rayonnement suivant l'axe R de rayonnement.

L'opacité de l'enceinte 6 permet également de limiter l'interférence avec un rayonnement lumineux extérieur, tout en conservant une certaine visibilité à l'oeil nu à l'intérieur de l'enceinte 6, par exemple pour surveiller les équipements.

Chaque unité 2 de mesure comprend en outre des moyens de commande des émetteurs 23 et des récepteurs 24. En particulier, selon le mode de réalisation préféré décrit ici, les moyens de commande comprennent des moyens de synchronisation entre les émetteurs 23 et les récepteurs 24, de sorte que le fonctionnement des émetteurs 23 entre eux est synchronisé et la mesure des signaux des récepteurs 24 est synchronisée sur le fonctionnement des émetteurs 23, selon un mode séquencé depuis le couple premier émetteur 23a / premier récepteur 24a du haut au couple dernier émetteur 23b / dernier récepteur 24b du bas.

Enfin, chaque unité 2 de mesure comprend un système d'acquisition, reliée aux récepteurs 24 pour recueillir les données des mesures effectuées.

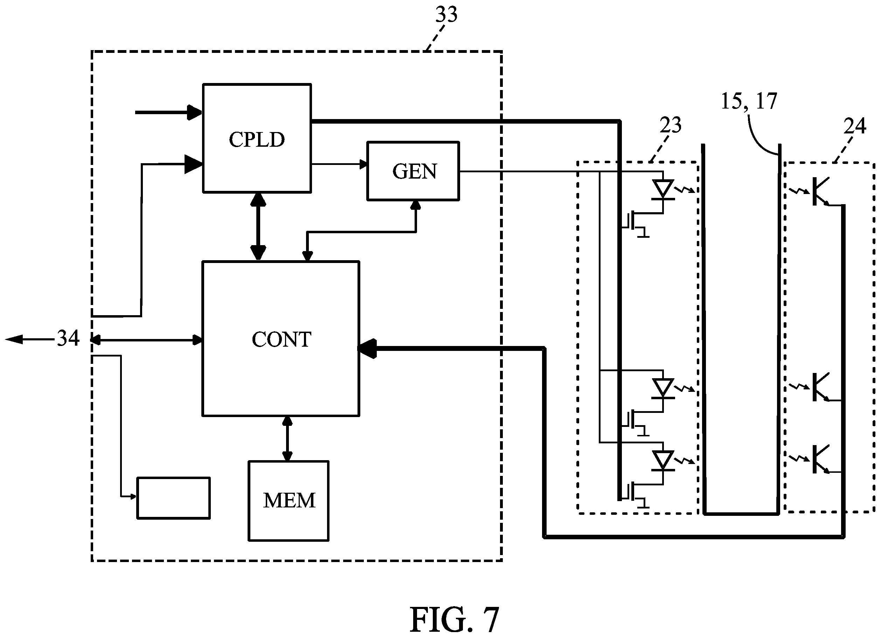

A cet effet, les moyens 22 de mesure comprennent un troisième support 33, également par exemple sous forme de circuit imprimé, pour supporter notamment de manière générale tout l'équipement de contrôle-acquisition nécessaire aux mesures. Ainsi, notamment, le troisième support 33 intègre les moyens de commandes des émetteurs 23 et des récepteurs 24, avec les moyens de synchronisation, ainsi que le système d'acquisition. La figure 7 illustre sous forme de schéma l'équipement électronique de l'unité 2 de mesure. Plus précisément, les moyens de commande peuvent se présenter sous forme d'un générateur de courant GEN couplé à un microcontrôleur CONT. Un circuit logique programmable CPLD peut être associé au microcontrôleur CONT. Une mémoire MEM, par exemple de type flash, pour stocker les résultats des mesures peut également être associée au microcontrôleur CONT. Elle peut se présenter par exemple sous la forme d'une carte micro-SD. Le microcontrôleur CONT et le circuit logique programmable CPLD sont reliés à connecteur électrique 34, qui est décrit plus loin, afin de communiquer avec l'extérieur. Ainsi, des instructions de commande sont transmises depuis l'extérieur au microcontrôleur CONT et au circuit logique programmable CPLD. Le fonctionnement des émetteurs 23 est contrôlé par le circuit CPLD, le générateur de courant GEN alimentant les émetteurs 23. Les signaux générés par les récepteurs 24 sont transmis dans le microcontrôleur CONT et sont stockés dans la mémoire MEM. Les signaux peuvent alors être récupérés à l'extérieur par le connecteur 34 électrique.

Le troisième support 33 est fixé rigidement au bâti 25, et notamment au socle 26 et à la bride 27, au moyen de visserie par exemple.

Les premier et deuxième supports 31, 32 sont connectés électriquement au troisième support 33 par exemple au moyen d'une connectique en nappe, souple et flexible.

Les supports 31, 32, 33 présentent une épaisseur relativement faible, inférieure à 1 mm, et par exemple de 0,8 mm. La faible épaisseur des supports 31, 32, 33 et le montage en surface des émetteurs 23 et des récepteurs 25 permet de diminuer significativement l'encombrement des moyens 22 de mesure pour les placer dans le volume 7 intérieur de l'enceinte 6, dans le compartiment 16 étanche.

Afin de récupérer les résultats des mesures effectuées et enregistrées par les moyens 22 de mesure, l'enceinte 6 est munie, sur sa paroi supérieure 10, d'un connecteur électrique **34** étanche, relié électriquement à l'intérieur de l'enceinte 6 au troisième support 33. Le connecteur 34 électrique est disponible à l'extérieur de l'enceinte 6, et permet de mettre l'unité 2 de mesure en connexion et de communiquer avec une centrale de récupération et de traitement des données. En variante, il pourra être prévu des moyens de communication sans fil entre les unités 2 de mesure et la centrale de récupération.

Il va maintenant être décrit un exemple du montage du réservoir 17 et des moyens 22 de mesure dans l'enceinte 6.

Selon un mode de réalisation, le fond 11 de l'enceinte 6 est d'abord désolidarisé de la paroi 10 latérale pour être fixé aux moyens 22 de mesure. Plus précisément, le socle 26 du bâti 25 est fixé rigidement au moyen de visserie **35** sur le fond 11 de l'enceinte 6. Les moyens 22 de mesure sont alors insérés dans le volume 7 intérieur de l'enceinte 6 par son extrémité 8 distale, de sorte que le fond 11 de l'enceinte 6 vienne refermer l'enceinte 6. Des moyens de fixation de type visserie **36** peuvent être mis en oeuvre pour fixé rigidement le fond 11 de l'enceinte 6 à la paroi 10 latérale. Un joint **37** est placé entre le fond 11 et la paroi 10 latérale de l'enceinte 6 pour garantir l'étanchéité du compartiment 16 étanche de l'enceinte 6. Le premier support 31 et le deuxième support 32 sont alors placés de telle manière que l'espace transversal entre eux, pour le réservoir 17, est aligné avec l'ouverture 12 de l'extrémité proximale de l'enceinte 6.

Les moyens de fixation de type visserie permettent de désolidariser le fond 11 de l'enceinte 6 ultérieurement, puis de le fixer de nouveau, et ce autant de fois et aussi longtemps que nécessaire.

Le premier support 31 et le deuxième support 32 sont alors à distance de la paroi 10 latérale de l'enceinte 6 dans le volume 7 intérieur, de sorte qu'en cas de choc, les supports 31, 32, et donc les émetteurs 23 et les récepteurs 24, ne viennent pas en contact avec la paroi 10 latérale. Ceci limite les risques d'endommagement ou de désalignement.

Le réservoir 17 peut ensuite être introduit par l'ouverture 12 du col 12' de l'enceinte 6 dans son volume 7 intérieur pour être disposé entre le premier support 28 et le deuxième support 29, le fond 16 du réservoir 14 venant en contact avec le socle 26 du bâti 25, par exemple dans la zone 30 de réception prévue à cet effet. Il pourra cependant être prévu que le réservoir 17 soit déjà installé sur le bâti 25 avant d'introduire l'ensemble dans l'enceinte 6.

La portion 17' supérieure du réservoir émerge alors hors de l'enceinte 6 par son ouverture 9. Les moyens 20 d'étanchéité - manchon 21 et joints 22 - sont alors mis en place entre l'enceinte 6 et la portion 17' supérieure du réservoir 17.

Le manchon 21 est destiné à coopérer avec un bouchon **38** pour fermer l'ouverture 19 du réservoir 17, par exemple en faisant coopérer un filet du manchon 21 avec un filet du bouchon 38. Ainsi, l'échantillon dans le réservoir 17 peut être isolé, et plus généralement l'unité 2 complète peut être isolée et transportée, comme cela sera explicité plus loin.

Le préleveur 4 est alors associé à l'unité 2 de mesure de manière à pouvoir remplir le réservoir 17 d'un échantillon 3 d'un fluide analysé prélevé in situ.

Le préleveur 4 comprend d'une part une entrée de fluide, apte à être en connexion fluidique avec la source de fluide à analyser. La source peut être par exemple une rivière ou un estuaire. D'autre part, le préleveur 4 comprend une sortie de fluide en connexion fluidique avec l'ouverture 19 du réservoir 17. Des moyens d'amenée du fluide, non représentés, permettent de faire circuler le fluide depuis la source par l'entrée de fluide jusqu'à la sortie de fluide reliée au système 5 d'approvisionnement pour remplir le réservoir 17. Ces moyens d'amenée comprennent par exemple un conduit connecté sur l'entrée de fluide du préleveur et une pompe. Le conduit peut mesurer plusieurs mètres, par exemple pour plonger suffisamment dans la source mais également pour pouvoir placer le dispositif 1 aisément à côté de la source.

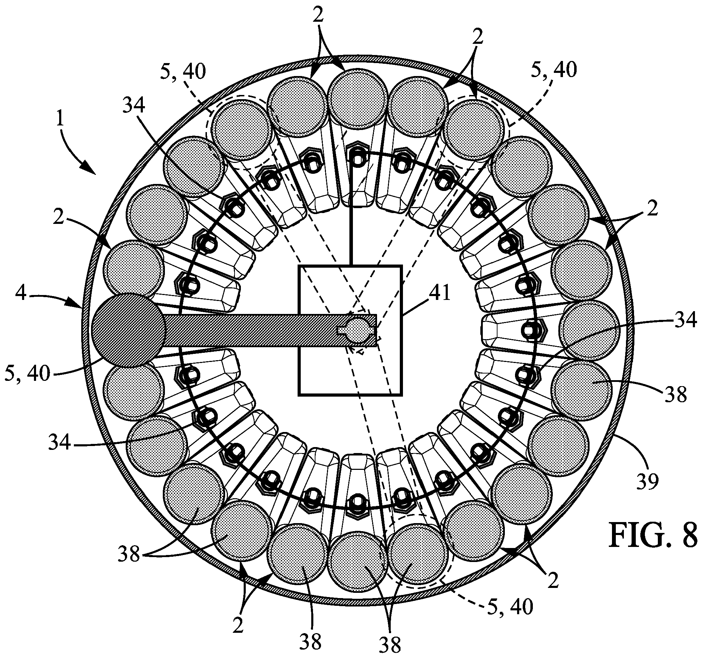

En pratique, le dispositif 1 comprend une pluralité d'unités 2 de mesure associées au préleveur 4, par exemple vingt quatre unités 2 comme illustré sur la figure 8.

A cet effet, le préleveur 4 comprend un bac 39 dans lequel les unités 2 de mesure sont placées de sorte que les enceintes 6 des unités sont accolées les une aux autres, le fond 11 des enceintes 6 étant posées sur le fond du bac. La forme en secteur de la paroi 10 latérale des enceintes 6 permet de les disposer selon un cercle, à la manière de pétales (voir figure 8). Le préleveur 4 comprend alors des moyens mettre sa sortie de fluide en connexion fluidique avec le réservoir 14 de chaque unité 2 de mesure.

Selon un premier mode de réalisation, le système 5 d'approvisionnement du préleveur 4 comprend un bras **40,** monté en rotation autour d'un axe du bac 39 de manière à décrire le cercle selon lequel les unités 2 sont disposées. Ainsi, le bras 40 peut se positionner au-dessus de l'ouverture 19 du réservoir 17 de chaque unité 2 de mesure pour remplir sur commande successivement le réservoir 17 de chaque unité 2 de mesure. Sur la figure 8, il est présenté le bras 40 en traits discontinus dans plusieurs positions successives. Chaque unité 2 de mesure peut alors fournir la vitesse de chute des particules dans l'échantillon 3, l'ensemble des unités permettant de surveiller l'évolution dans le temps de la vitesse de chute.

Selon un deuxième mode de réalisation, le préleveur 4 comprend des moyens pour remplir simultanément les réservoirs 17 de l'ensemble ou d'une partie déterminée des unités 2 de mesure permettant par exemple de surveiller à un même instant donné plusieurs endroits d'une même source. A cet effet, il pourra être prévu que le préleveur 4 comprenne plusieurs entrées de fluide chacune étant reliée à un conduit plongeant dans un endroit différent d'une même source ou de plusieurs sources.

Les connecteurs 31 électriques des unités 2 de mesure sont par exemple tous connectés à une centrale de récupération des données, laquelle peut être regroupée au sein d'un même bus **41** de communication, comprenant en outre par exemple les moyens 5 de commande du préleveur 4. Le bus 41 de communication central permet notamment de fournir l'alimentation à l'ensemble des unités 2 de mesure et de se connecter par exemple à un système informatique, par liaison avec ou sans fil. Notamment, le bus 41 de communication permet de reconnaître individuellement chaque unité 2 de mesure, par exemple au moyen d'une adresse qui lui est propre, fixée en interne. Le bus 41 de communication permet également de recevoir des instructions de l'extérieur et de les communiquer aux unités 2 de mesure concernées.

Un couvercle, non représenté, peut venir refermer le bac, de manière étanche mais non nécessairement.

Eventuellement, les unités 2 de mesure peuvent être isolées une à une, par exemple pour que l'échantillon contenu dans leur réservoir 17 subissent d'autres analyses. A cet effet, le bouchon 38 est rapporté sur l'enceinte 6 pour boucher l'ouverture 19 du réservoir 17, et le connecteur 34 électrique est déconnecté de la centrale de récupération et de traitement des données. L'unité 2 de mesure isolée peut ainsi être retirée du bac 39, par exemple pour effectuer un contrôle visuel de l'échantillon 3 dans le réservoir 17 ou pour transporter l'unité 2.

Des moyens de vidange automatique des réservoirs 17 peuvent par ailleurs être prévus, afin de commander ou de programmer la vidange des réservoirs 17 pour un cycle de mesures suivant.

Ainsi, les données sont traitées unité 2 par unité 2, c'est-à-dire échantillon par échantillon, permettant de suivre l'évolution de la vitesse de chute par exemple dans le temps mais aussi dans l'espace.

Il va maintenant être décrit un exemple de mise en oeuvre d'une unité 2 de mesure.

A cet effet, le réservoir 17 de l'unité 2 est remplie par le préleveur 4 automatique, par exemple et non nécessairement jusqu'à ce que le niveau d'échantillon 3 atteigne le collier 29 de la bride 27.

Grâce au dispositif 1 de mesure ainsi décrit, il est possible de mesurer la vitesse de chute de particules en tenant compte du phénomène de floculation, afin de quantifier ce phénomène.

A cet effet, un échantillon 3 est introduit dans le réservoir 17 d'une unité 2 de mesure du dispositif 1.

A partir d'un signal de départ, un cycle de mesure est lancé. Le signal de départ peut être donné immédiatement après l'introduction de l'échantillon dans la colonne 3 jusqu'au niveau maximal d'échantillon voulu, notamment par le préleveur 4, ou peut être donné sur commande d'un opérateur. Le signal peut également être préréglé en fonction du temps par exemple.

Le signal de départ est pris en compte par les moyens de synchronisation, lesquels commandent alors l'émission par les émetteurs 23 d'un rayonnement électromagnétique. Chaque émetteur 23, à partir du premier émetteur 23a jusqu'au dernier émetteur 23b, émet, successivement, à son tour, une impulsion du rayonnement, d'une brève durée. Les moyens de synchronisation commandent également les récepteurs 24, pour que chaque récepteur 24 reçoive l'impulsion envoyée par l'émetteur 23 lui correspondant, après avoir traversé l'échantillon 3.

Lors de la traversée de l'échantillon 3, l'impulsion du rayonnement d'un émetteur 23 est en partie absorbée, diffusée ou déviée, de sorte que seule une partie est reçue par le récepteur 24 correspondant. Les moyens de synchronisation permettent de s'assurer que le rayonnement reçu par un récepteur 24 correspond à une impulsion émise par un émetteur 23 précis. Ainsi, à chaque signal obtenu par un récepteur 24 correspond une hauteur, c'est-à-dire une position selon l'axe longitudinal, sur le réservoir 17. En d'autres termes, à chaque mesure correspond un couple émetteur 23 / récepteur 24.

L'absorbance est considérée ici comme étant la cause principale à l'affaiblissement du rayonnement électromagnétique traversant l'échantillon dans la colonne 3.

Le signal reçu par chaque récepteur 24 est alors recueilli par le système d'acquisition, puis il peut être enregistré par exemple dans la mémoire MEM de l'unité 2 de mesure. Une unité de traitement du signal, par exemple dans un système informatique extérieur, permet alors de déterminer l'absorbance de l'impulsion par l'échantillon 3.

La mesure par absorbance est particulièrement adaptée pour des échantillons dont la concentration en particules au delà de un gramme par litre et atteignant des valeurs très élevées, jusqu'à 300 g/L, rendant le dispositif particulièrement adapté à la mesure de vitesse de chute des sédiments dans des milieux à forte concentration, tels que les rivières de montagne ou les réseaux d'eaux usées. En outre, le montage des émetteurs 23 et des récepteurs 24 pour effectuer la mesure par absorbance est simple et robuste.

Plus particulièrement, les moyens de commande des émetteurs 23 permettent de régler leur courant d'alimentation. Par exemple, le générateur de courant GEN est réglable. Ainsi, en fonction de la concentration en particules attendue dans le milieu à analyser, il est possible d'adapter le courant des émetteurs 23 en conséquence. L'unité 2 de mesure peut donc être utilisée pour une vaste gamme d'applications impliquant des concentrations variant de 1 g/L à plusieurs centaines de g/L.

Plusieurs cycles de mesure sont répétés, de manière à obtenir l'absorbance de l'échantillon 3 en fonction du temps et de la hauteur. Les cycles peuvent être répétés très rapidement les uns à la suite des autres. En effet, l'impulsion émise par le dernier émetteur 23b à la fin d'un cycle peut être suivie quasiment immédiatement, en pratique quelques microsecondes après, en tout cas dans un délai réglable, par une impulsion émise par le premier émetteur 23a pour commencer le cycle suivant. Les cycles sont répétés sur des périodes allant quelques millisecondes à la minute.

Un exemple numérique va maintenant être décrit pour plus de précision, dans le cas où l'échantillon 3 est un mélange d'un fluide et de particules en suspension. Il s'agit notamment d'un échantillon d'eau comprenant des sédiments en suspension.

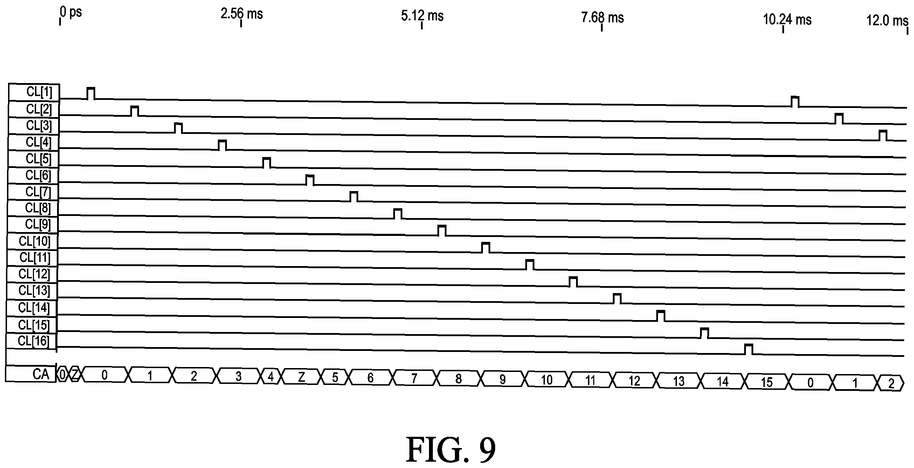

La figure 9 indique le chronogramme des commandes d'impulsions de rayonnement pour un cycle de 10 ms (millisecondes), pour un dispositif 1 de mesure comprenant seize émetteurs 23 répartis régulièrement sur la hauteur du réservoir 17, et seize récepteurs 24 correspondants. La portion de réservoir 17 entre le socle 26 et le collier 29 de la bride 27 mesure 20 cm environ de hauteur, et les émetteurs 23 et les récepteurs 24 sont répartis tous les 1 cm. A partir d'un signal de départ, une commande CL[1] est envoyée au premier émetteur 23a pour émettre une impulsion. La durée d'une impulsion est par exemple de 0,1 ms. Une commande CL[2] est ensuite envoyée à l'émetteur suivant, et ainsi de suite, jusqu'à une commande CL[16] dernier émetteur 23b. La durée entre la fin d'une impulsion d'un émetteur 23 et le début de l'impulsion de l'émetteur 23 suivant est par exemple d'un peu plus de 0,6 ms.

Les récepteurs 24 fournissent ainsi l'absorbance en fonction de la hauteur sur le réservoir 17 et en fonction du temps.

La mesure d'absorbance par chaque récepteur 24 peut être améliorée en réalisant également une mesure en l'absence d'émission de rayonnement par l'émetteur 23 lui correspondant, immédiatement après la réception d'une l'impulsion. Le signal obtenu sans impulsion est ensuite retranché au signal obtenu avec impulsion, permettant d'éliminer l'influence éventuelle de rayonnement parasite extérieur.

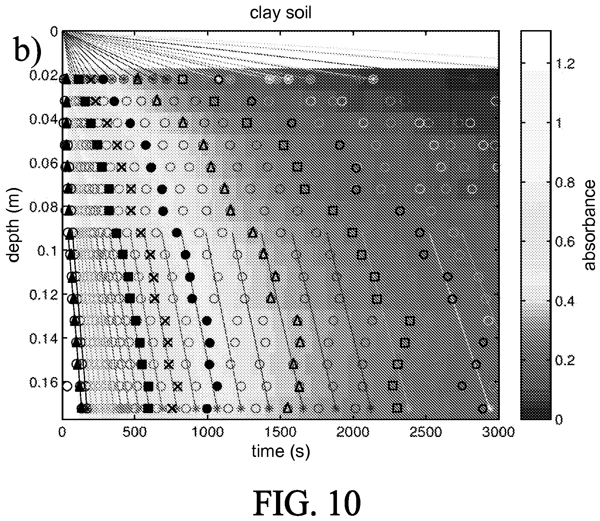

La figure 10 présente un résultat obtenu pour des cycles de mesure répétés sur 3000 s, et illustrant la variation de l'absorbance de l'échantillon 3 dans l'unité 2 de mesure en fonction du temps et de la hauteur sur le réservoir 17, la hauteur zéro correspondant au niveau maximal d'échantillon, c'est-à-dire la surface libre de l'échantillon dans le réservoir 17. L'échantillon analysé est un mélange d'eau et de sédiments pour une concentration d'environ 1,5 gramme de matière sèche par litre de mélange. L'axe R de rayonnement des émetteurs 23 est perpendiculaire à l'axe L longitudinal du réservoir 17.

L'absorbance diminue avec le temps, indiquant que les particules sont initialement en suspension dans le fluide, puis qu'elles retombent au fond du réservoir 17. L'absorbance, au cours d'un cycle de mesure, varie également en fonction de la hauteur sur le réservoir 17, l'absorbance étant plus élevée vers le fond 18 du réservoir 17, où s'accumulent les particules.

La vitesse de chute des particules peut ainsi être déterminée. En effet, des expériences en laboratoire ont démontré qu'il est possible de distinguer des classes de particules, c'est-à-dire que les particules d'une classe chutent à des vitesses différentes de celles des particules d'une autre classe, à partir de l'absorbance spécifique de chaque classe : une absorbance donnée, ou en d'autres termes à iso-absorbance, correspond à la somme des absorbances spécifiques à chaque classe de particules. Dès lors, grâce à la pluralité de cycles de mesure, il est possible de suivre virtuellement une classe de particules dans leur chute en suivant l'évolution de l'absorbance totale au cours de l'essai. A iso-absorbance, on obtient une courbe de la hauteur en fonction du temps. Six courbes à iso-absorbance sont repérées sur la figure 10. On observe ainsi que la vitesse de chute varie en fonction de la hauteur. Plus précisément, on observe que la courbe comprend, à partir de la surface libre de l'échantillon 3, dans le réservoir 17, une première portion sensiblement droite, correspondant au début de la chute, puis une portion incurvée dans une deuxième portion, correspondant à la fin de la chute, et caractéristique du phénomène de floculation.

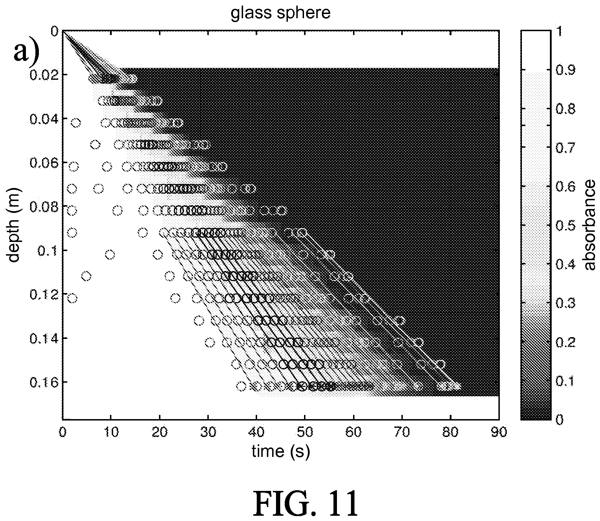

A titre comparatif, la figure 11 illustre les résultats obtenus à l'aide du dispositif 1 de mesure pour un échantillon d'eau dans lequel des billes de verre ont été introduites. Les billes de verre sont choisies précisément car elles ne sont pas sensibles au phénomène de floculation : elles ne s'agglomèrent pas entre elles du fait du caractère inerte du verre. Les courbes à iso-absorbance sont sensiblement droites tout du long, du début à la fin, indiquant que la vitesse de chute ne varie pas avec la hauteur, et donc qu'il n'y a pas floculation.

Ainsi, de manière générale, lorsqu'une courbe d'iso-absorbance comprend au moins trois points non alignés, on peut parler de floculation.

Plus précisément, sur une courbe d'iso-absorbance, la tangente au premier point de mesure, c'est-à-dire à la mesure issue de l'impulsion émise par le premier émetteur 23a, le plus haut sur le réservoir 17, fournit une vitesse initiale, notée $v_i$. La tangente au dernier point de mesure, c'est-à-dire à la mesure issue de l'impulsion émise par le dernier émetteur 23b, le plus bas sur le réservoir 17, fournit une vitesse finale, $v_f$

Grâce à la connaissance de la vitesse initiale $v_i$ et de la vitesse finale $v_f$, le phénomène de floculation est mis en évidence et quantifié : les particules s'agglomérant par le phénomène de floculation ont une vitesse de chute qui devient de plus en plus grande au fur et à mesure qu'elles s'agglomèrent et deviennent plus lourdes.

Il est alors possible de quantifier la floculation et de caractériser un échantillon par un indice $I_f$ de floculation.

Par exemple, l'indice $I_{f1}$ de floculation peut être construit pour correspondre à l'augmentation relative de la vitesse de chute le long d'une courbe d'iso-absorbance :

$$I_{f1} = \frac{v_f - v_i}{v_i} \qquad (1)$$

La vitesse $v_i$ initiale peut être déterminée simplement en considérant respectivement la tangente au point le plus haut de la courbe d'iso-absorbance et la vitesse $v_f$ finale peut être de même déterminée en considérant la tangente au point le plus bas sur la même courbe d'iso-absorbance.

L'indice $I_{f1}$ de floculation est alors défini pour différentes absorbances, au choix de l'opérateur qui peut lui-même déterminer le nombre de courbes d'iso-absorbance à considérer.

L'indice $I_{f1}$ de floculation peut également être déterminé par un ajustement linéaire, consistant à déterminer, pour chaque iso-absorbance, deux séries de mesures, respectivement aux instants $t_0$, $t_1$, $t_2$, $t_3$, $t_4$ et $t_5$, $t_6$, $t_7$, $t_8$, $t_9$ et aux profondeurs $z_0$, $z_1$, $z_2$, $z_3$, $z_4$ et $z_5$, $z_6$, $z_7$, $z_8$, $z_9$. Par exemple, $z_0$ correspond à la hauteur la plus proche de la surface libre de l'échantillon dans le réservoir 17 pour laquelle on obtient une mesure d'absorbance, et $z_9$ correspond à la hauteur la plus proche du fond 18 du réservoir 17 pour laquelle on obtient une mesure d'absorbance. Un ajustement linéaire selon la méthode des moindres carrés sur les deux séries est alors réalisé :

$$z_n = v_i \times t_n + b_i \text{ pour n} = [0, ..., 4], \qquad (2)$$

$$z_n = v_f \times t_n + b_f \text{ pour n} = [4, ..., 9], \qquad (3)$$

$b_i$ et $b_f$ étant des constantes.

La vitesse $v_i$ initiale est alors la moyenne calculée par la méthode des moindres carrés appliquée à la formule (2) et la vitesse $v_f$ finale est alors la calculée par la méthode des moindres carrés appliquée à la formule (3). Sur la figure 10, on a représenté en trait continu la droite représentative de la vitesse $v_i$ initiale et la droite représentative de la vitesse $v_f$ finale pour différentes courbes d'iso-absorbance, les droites étant obtenues par la méthode d'ajustement linéaire.

Pour appliquer cette méthode de calcul et obtenir des résultats fiables, cinq mesures pour chacune des deux séries doivent avantageusement être enregistrées. Or, la vitesse de chute des particules est en principe moins importante à proximité de la surface libre de l'échantillon dans le réservoir 17 que vers le fond 18 du réservoir. Par conséquent, l'écart selon la hauteur du réservoir 17 entre deux mesures, c'est-à-dire entre les mesures par deux récepteurs 24 successifs est de préférence moins important pour la première série de mesures que pour la deuxième série de mesures. Ainsi, les cinq premiers émetteurs 23 peuvent par exemple être répartis tous les 0,5 cm à partir du premier émetteur 23a, et les cinq derniers émetteurs 23 peuvent être plus espacés, par exemple tous les 2 cm, jusqu'au dernier émetteur 23b.

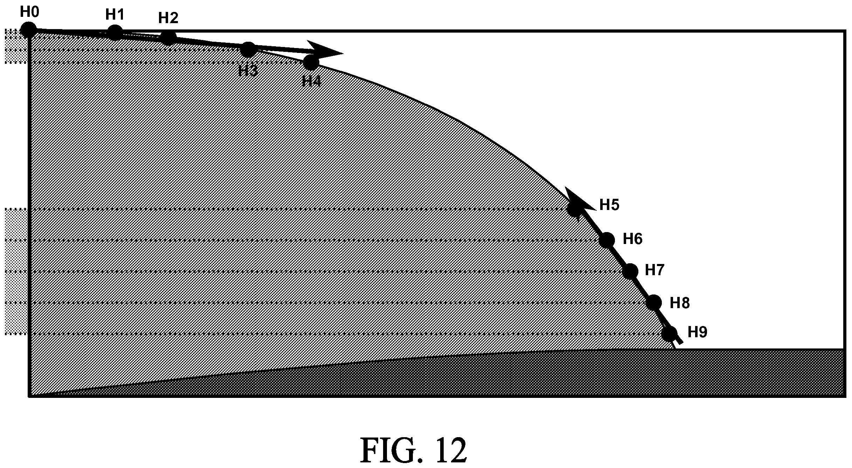

La figure 12 illustre cette contrainte. La figure 12 représente de manière schématique une courbe, extraite de la figure 10 par exemple, de la hauteur sur le réservoir 17 en fonction du temps, à iso-absorbance c'est-à-dire la vitesse de chute pour une unique classe de particules. Il est également représenté en gris foncé sur la figure 12 la formation de la couche de particules au fond de la colonne, à travers laquelle les impulsions ne passent pas. La pente de la courbe augmente au fur et à mesure qu'on s'approche du fond 18 du réservoir 17, à cause, on l'a vu, du phénomène de floculation. Ainsi, pour pouvoir caractériser au mieux la portion de la courbe où la pente est la plus faible, c'est-à-dire à proximité de la surface libre de l'échantillon il faut que les émetteurs 23 et les récepteurs 24 soient à une distance suffisamment faible pour obtenir la vitesse de chute de manière fiable. On a ainsi indiqué par H0, H1, H2, H3 et H4 les hauteurs auxquelles une mesure est effectuée pour obtenir la première série. A l'inverse, la portion de la courbe vers le fond de la colonne peut être caractérisée avec des mesures plus espacées, pour lesquelles on a indiqué par H5, H6, H7, H8 et H9 les hauteurs pour obtenir les mesures de la deuxième série.

L'indice $I_{f1}$ de floculation ainsi calculé permet de quantifier la floculation de manière précise, et reflète la réalité. En effet, par exemple un indice $I_{f1}$ de floculation égal à trois indique que les particules floculées en bas du réservoir 17 ont une vitesse de chute augmentée de 300% à proximité du fond 18 du réservoir 17 par rapport aux mesures à proximité de la surface libre de l'échantillon 3 dans le réservoir 17.

Lorsque l'écart selon la hauteur du réservoir 17 entre deux mesures est trop important pour permettre un ajustement linéaire, une méthode alternative consiste à se baser sur une seule hauteur de mesure. Il n'est alors plus question d'obtenir une vitesse de chute des particules, mais le but est d'obtenir une sous-estimation de celle-ci. A cet effet, une vitesse $w_n$ estimée est associée à chaque mesure par un récepteur 24 indicé n. La vitesse $w_n$ estimée est définie comme le rapport de la hauteur $z_n$ de l'émetteur 23, ou du récepteur correspondant 24 puisqu'il est à la même hauteur, et du temps $t_n$ auquel le signal du récepteur n prend la valeur d'absorbance choisie :

$$w_n = \frac{z_n}{t_n} \tag{4}$$

En pratique, lorsque la formule (4) est appliquée pour un récepteur 24 proche de la surface libre de l'échantillon 3 dans le réservoir 17, par exemple pour le premier récepteur 24a, il est considéré que la vitesse $w_i$ estimée obtenue est assez proche de la vitesse de chute réelle des particules dans cette portion de la colonne. Lorsque la formule (4) est appliquée pour un récepteur 24 proche du fond 18 du réservoir 17, par exemple pour le dernier récepteur 24b, alors la vitesse $w_f$ estimée obtenue n'a pas de signification physique.

Cependant, les vitesses $w_i$ et $w_f$ estimées permettent tout de même de calculer un indice$I_{f2}$ de floculation porteur de sens physique :

$$I_{f2} = \frac{w_f - w_i}{w_i} \tag{5}$$

En variante, les deux méthodes exposées ci-dessus peuvent être combinées pour obtenir un indice $I_{f3}$ de floculation plus robuste :

$$I_{f3} = \frac{v_f - w_f}{v_f} \tag{6}$$

La formule (6) ne fait pas intervenir la vitesse initiale $v_i$ ou $w_i$, de sorte qu'elle permet de quantifier la floculation lorsque la mesure des vitesses $v_i$ ou $w_i$ de chute initiales n'est pas satisfaisante.

La valeur numérique des indices $I_{f1}$, $I_{f2}$, $I_{f3}$ de floculation obtenue à partir des trois formules (1), (5) et (6) présentées ci-dessus peut être différente. Cependant, leur évolution relative est sensiblement similaire. Par conséquent, même en utilisant des formules différentes pour quantifier la floculation de différents matériaux, il est possible de les comparer.

Pour des billes de verre, on obtiendra des indices de floculation proche de 0, par exemple compris entre -0,5 et 1. Pour des particules d'argiles très floculantes on obtiendra des indices de floculation allant de quelques dizaines à quelques centaines.

Plus le nombre de couple d'émetteurs 23 / récepteurs 24 est important, plus la qualité des résultats obtenus est haute et permet de rendre compte de la réalité du phénomène de floculation. Par exemple, pour des échantillons de concentration très élevée, c'est-à-dire de plusieurs grammes par litre, l'impulsion émise par les émetteurs 23 proches du fond du réservoir 17 traverse une couche de particules déjà déposées au fond du réservoir. Le signal obtenu par les récepteurs 24 correspondants est nul et non exploitable. Il faut donc pouvoir éliminer les résultats obtenus par ces récepteurs 24, tout en conservant un nombre suffisant de récepteurs 24 pour lesquels le signal est exploitable, hors de la couche de particules déposées.

Il résulte de la description ci-dessus que le dispositif 1 de mesure peut ainsi être mis en oeuvre in situ, c'est-à-dire directement à proximité du milieu à analyser, à l'inverse des techniques qui se font totalement en laboratoire. Par exemple, le dispositif 1 peut être placé sur la rive d'un cours d'eau, le préleveur 4 automatique remplissant le réservoir 17 des unités 2 de mesure sur commande.

Aucune étape de transport n'est requise. L'analyse peut être effectuée immédiatement après le prélèvement, c'est-à-dire dès que le réservoir 17 est rempli d'une quantité déterminée de fluide et de particules. Ainsi, le phénomène de floculation peut être mis en évidence sur un échantillon reflétant une image quasiment exacte du milieu analysé. La vitesse de chute des particules ainsi mesurée présente une précision accrue. En particulier, il est possible de voir son évolution en fonction du temps et de la profondeur.

Le délai pour réaliser un cycle est de quelques millisecondes, et le cycle suivant peut être entrepris quasiment immédiatement, de sorte que des particules ayant des vitesses de chute élevées, de l'ordre du centimètre par seconde, peuvent être analysées à l'aide du dispositif 1 de mesure. Le dispositif 1 de mesure pouvant être mis en oeuvre sur de longues durées de plusieurs heures, il est également adapté à l'analyse de particules ayant des vitesses de chute plus faible, par exemple de l'ordre du micromètre par seconde, voire en dessous.

L'échantillon analysé peut présenter une concentration en particules supérieure au gramme par litre, voire allant jusqu'à plusieurs centaines de grammes par litre, le rendant particulièrement adapté à l'analyse des cours d'eau en milieu montagneux. Le dispositif 1 peut en outre être utilisé pour plusieurs sortes de milieux à analyser, ayant des concentrations attendues en particules très différentes. Le dispositif 1 est donc particulièrement polyvalent.

Le dispositif 1 de mesure se présente sous la forme par exemple d'une boîte incorporant une ou plusieurs unités 2 de mesure associées à un seul et même préleveur 4. Le dispositif 1 de mesure est donc particulièrement facile à transporter et peut rapidement être déplacé d'un point d'analyse à un autre.

Le dispositif 1 se révèle ainsi peu coûteux, et peut être installé à l'extérieur, par exemple à côté d'un cours d'eau, sans précaution particulière, et ce pour plusieurs jours. Eventuellement, le bac 39 peut former un compartiment fermé par un couvercle, protégeant les réservoirs 17, les émetteurs 23 et les récepteurs 24 des éléments naturels, par exemple la lumière extérieure, la pluie, le vent, ou encore les animaux lorsque le dispositif 1 est laissé plusieurs jours sur place. En outre, il n'est pas nécessaire que l'axe R de rayonnement des émetteurs 23 soit rigoureusement parallèle à la surface libre de l'échantillon dans l'enceinte 6. Ainsi, il n'est pas nécessaire de se préoccuper avec précision de l'horizontalité de la surface sur laquelle le dispositif est posé.

Le déploiement sur site du dispositif 1 de mesure est également aisé, car aucun montage supplémentaire ni aucun traitement de l'échantillon n'est nécessaire. La liaison entre le bus 41 de communication et un système informatique extérieur n'est pas nécessaire pour le fonctionnement du dispositif 1 : une fois que les commandes ont été transmises au bus 41 de communication, le dispositif 1 est totalement autonome.

On a décrit ci-dessus l'application dans laquelle le compartiment 15 ouvert des unités 2 est rempli par un préleveur 4 automatique. Les compartiments 15 ouverts peuvent cependant tout à fait être remplis manuellement si besoin, par exemple lorsque l'installation d'un préleveur 4 automatique sur le terrain s'avère difficile en raison des conditions, par exemple lorsque le courant d'une rivière à étudier est trop fort.

Chaque unité 2 de mesure peut être considérée et mise en oeuvre indépendamment les une des autres. Par exemple, chaque unité 2 peut être remplie indépendamment des autres, de manière à permettre des analyses comparatives sur les échantillons prélevées par exemple à des instants différents et/ou à des endroits différents.

En outre, chaque unité 2 de mesure forme en elle-même un instrument de mesure autonome et complet pour la quantification de la floculation. Le remplissage et la vidange du compartiment 15 ouvert pouvant se faire automatiquement, par exemple en étant programmés, l'unité 2 de mesure ne requière aucunement la présence d'un opérateur pour effectuer les mesures. Les données de mesure sont recueillies automatiquement par le système d'acquisition, puis elles sont récupérées par exemple par le bus 41 de communication ou lorsqu'un opérateur connecte directement un ordinateur sur le connecteur 34 de chaque unité 2.

Chaque unité 2 de mesure peut par ailleurs être facilement mise en oeuvre n'importe où sur le terrain sans précautions particulières et fournir rapidement la quantification de la floculation, sans nécessiter de traitement ultérieur de l'échantillon 3 prélevé ni de transport dans un laboratoire.

Le dispositif 1 de mesure peut être appliqué à différents types de matériaux en suspension sous forme de particule, dans des fluides également de nature variée, pour des coefficients de floculation variés.

D'autres techniques de mesure peuvent être adaptées sur le dispositif 1 de mesure, telles que les mesures de diffusion, de rétrodiffusion ou encore l'analyse des motifs de diffraction.

**Revendications**

1. Unité **(2)** de mesure de la vitesse de chute de particules en suspension dans un fluide d'une source, l'unité **(2)** comprenant :

- une enceinte **(6)** étanche présentant une ouverture (12), l'enceinte **(6)** définissant un compartiment **(15)** ouvert qui comprend l'ouverture **(9)** et un compartiment **(16)** étanche, des moyens **(20)** d'étanchéité séparant le compartiment **(15)** ouvert du compartiment **(16)** étanche, le compartiment **(15)** ouvert étant destiné à contenir un échantillon **(3)** du fluide à analyser ;
- des moyens **(22)** de mesure de la vitesse de chute des particules de l'échantillon **(3)** dans le compartiment **(15)** ouvert, lesdits moyens **(22)** de mesure étant placés dans le compartiment **(16)** étanche de l'enceinte **(6),** lesdits moyens **(22)** de mesure étant de type optique et comprenant :

   • au moins trois émetteurs **(23)** d'un rayonnement électromagnétique, les émetteurs **(23)** étant répartis selon un axe **(L)** longitudinal du compartiment **(15)** ouvert, chaque émetteur **(23)** étant orienté selon un axe **(R)** de rayonnement croisant le compartiment **(15)** ouvert à des hauteurs différentes selon l"axe **(L)** longitudinal sur le compartiment **(15)** ouvert ;
   • des récepteurs **(24),** dont le nombre est égal au nombre d'émetteurs **(23)** et qui sont répartis selon l'axe **(L)** longitudinal, chaque récepteur **(24)** étant placé dans l'axe **(R)** de rayonnement d'un émetteur **(23),** de manière à recevoir le rayonnement de l'émetteur **(23)** correspondant après traversée du compartiment **(15)** ouvert ;
   • des moyens de commande des émetteurs **(23)** et des récepteurs **(24) ;**
   • un système d'acquisition des données relié aux récepteurs **(24)** pour recueillir les données des mesures effectuées,

   les données acquises permettant d'obtenir la vitesse de chute des particules et son évolution en fonction de la hauteur dans le compartiment **(15)** ouvert et en fonction du temps, ladite évolution quantifiant une floculation des particules.

2. Unité **(2)** de mesure selon la revendication 1 dans laquelle les données acquises par les moyens **(22)** de mesure sont une mesure de l'absorbance du rayonnement émis par les émetteurs **(23)** et reçu par chaque récepteur **(24).**

3. Unité **(2)** de mesure selon la revendication 1 ou la revendication 2, dans laquelle les émetteurs **(23)** sont de type diode électroluminescente.

4. Unité **(2)** de mesure selon l'une quelconque des revendications précédentes, dans laquelle le rayonnement a une longueur d'onde comprise dans l'infrarouge.

5. Unité **(2)** de mesure selon l'une quelconque des revendications précédentes, dans laquelle la distance longitudinale entre l'axe **(R)** de rayonnement de deux émetteurs **(23)** successifs et adjacents est au plus de 5 cm.

6. Unité **(2)** de mesure selon l'une quelconque des revendications précédentes, dans laquelle la distance longitudinale entre l'axe **(R)** de rayonnement de deux émetteurs **(23)** successifs et adjacents est de 1 cm

7. Unité **(2)** de mesure selon l'une quelconque des revendications précédentes, dans laquelle le compartiment **(15)** ouvert est formé par un réservoir **(17)** introduit dans l'enceinte **(6),** les moyens **(22)** d'étanchéité étant placés entre le réservoir **(17)** et l'enceinte **(6).**

8. Unité **(2)** de mesure selon l'une quelconque des revendications précédentes, dans laquelle le fond **(11)** de l'enceinte **(6)** est amovible.

9. Unité **(2)** de mesure selon l'une quelconque des revendications précédentes, comprenant des moyens de vidange du compartiment **(15)** ouvert de la au moins une unité **(2)** de mesure.

10. Unité **(2)** de mesure selon l'une quelconque des revendications précédentes, comrpenant un connecteur **(34)** électrique disponible à l'extérieur de l'enceinte **(6),** apte à communiquer avec une centrale de récupération et de traitement des données

11. Dispositif (**1**) de mesure de la vitesse de chute de particules en suspension dans un fluide d'une source, le dispositif (**1**) comprenant :

- au moins une unité (**2**) de mesure selon l'une quelconque des revendications précédentes ;
- un préleveur (**4**) de type automatique comprenant une entrée de fluide apte à être en connexion fluidique avec la source de fluide et une sortie de fluide en connexion fluidique avec le compartiment (**15**) ouvert de l'enceinte (**6**) de la au moins une unité (**2**) de mesure.

12. Dispositif (**1**) de mesure selon la revendication précédente, comprenant une pluralité d'unités (**2**) de mesure.

13. Dispositif (**1**) de mesure selon la revendication 12, dans lequel le préleveur (**4**) est en connexion fluidique avec le compartiment (**15**) ouvert d'une unité (**2**) de mesure à la fois et comprend des moyens pour se déplacer et être en connexion fluidique avec le compartiment (**15**) ouvert d'au moins une autre unité de mesure, les moyens de commande du préleveur (**4**) permettant de commander le remplissage du compartiment (**15**) ouvert de l'une ou l'autre des unités (**2**) de mesure.

14. Dispositif (**1**) de mesure selon la revendication 12, dans lequel le préleveur (**4**) est en connexion fluidique simultanément avec les compartiments (**15**) ouverts de plusieurs des unités (**2**) de mesure, les moyens de commande pouvant commander le remplissage simultané des compartiments (**15**) ouverts.

15. Dispositif (**1**) de mesure selon l'une quelconque des revendications 12 à 14, le dispositif (1) comprenant un bac (**39**) formant réceptacle pour la pluralité d'unités (2) de mesure, le préleveur (**4**) étant en connexion fluidique avec le compartiment (**15**) ouvert de chacune des unités (**2**) de mesure.

16. Application d'une unité de mesure selon l'une quelconque des revendications 1 à 10 pour mesurer la vitesse de chute de particules en suspension dans un fluide, dans laquelle le fluide est de l'eau et les particules sont des sédiments.

**Patentansprüche**

1. Einheit (2) zur Messung der Sedimentationsgeschwindigkeit von Partikeln in Suspension in einem Fluid einer Quelle, wobei die Einheit (2) aufweist:

- einen dichten Behälter (6), der eine Öffnung (12) aufweist, wobei der Behälter (6) eine offene Kammer (15), die die Öffnung (9) aufweist, und eine dichte Kammer (16) definiert, wobei Dichtungsmittel (20) die offene Kammer (15) von der dichten Kammer (16) trennen, wobei die offene Kammer (15) vorgesehen ist, eine Probe (3) des zu analysierenden Fluides aufzunehmen;
- Messeinrichtungen (22) zum Messen der Sedimentationsgeschwindigkeit der Partikel der Probe (3) in der offenen Kammer (15), wobei die Messeinrichtungen (22) in der dichten Kammer (16) des Behälters (6) angeordnet sind, wobei die Messeinrichtungen (22) des optischen Typs sind und aufweisen:

* mindestens drei Emitter (23) einer elektromagnetischen Strahlung, wobei die Emitter (23) entlang einer Längsachse (L) der offenen Kammer (15) verteilt sind, wobei jeder Emitter (23) entlang einer Strahlungsachse (R) orientiert ist, die die offene Kammer (15) entlang der Längsachse (L) der offenen Kammer (15) in unterschiedlichen Höhen kreuzt;
* Empfänger (24), deren Anzahl gleich der Anzahl der Emitter (23) ist und die entlang der Längsachse (L) verteilt sind, wobei jeder Empfänger (24) in der Strahlungsachse (R) eines Emitters (23) angeordnet ist, um so die Strahlung des entsprechenden Emitters (23) nach ihrem Durchgang durch die offene Kammer (15) zu empfangen;
* Steuerungseinrichtungen zum Steuern der Emitter (23) und der Empfänger (24);
* ein an den Empfängern (24) angeschlossenes Datenerfassungssystem zum Sammeln der Daten der durchgeführten Messungen,

wobei die erfassten Daten erlauben, die Sedimentationsgeschwindigkeit der Partikel und deren Änderung als Funktion der Höhe in der offenen Kammer (15) und als Funktion der Zeit zu gewinnen, wobei die Änderung eine Ausflockung der Partikel quantifiziert.

**2.** Einheit (2) zur Messung nach Anspruch 1, in welcher die von den Messeinrichtungen (22) erfassten Daten ein Maß der Absorption der von den Emittern (23) emittierten und von jedem Empfänger (24) empfangenen Strahlung sind.

**3.** Einheit (2) zur Messung nach Anspruch 1 oder Anspruch 2, in welcher die Emitter (23) des Typs Elektrolumineszenz-Diode sind.

**4.** Einheit (2) zur Messung nach einem der vorstehenden Ansprüche, in welcher die Strahlung eine Wellenlänge im Infrarotbereich hat.

**5.** Einheit (2) zur Messung nach einem der vorstehenden Ansprüche, in welcher der Längsabstand zwischen der Strahlungsachse (R) von zwei aufeinanderfolgenden und benachbarten Emittern (23) maximal 5cm ist.

**6.** Einheit (2) zur Messung nach einem der vorstehenden Ansprüche, in welcher der Längsabstand zwischen der Strahlungsachse (R) von zwei aufeinanderfolgenden und benachbarten Emittern (23) 1cm ist.

**7.** Einheit (2) zur Messung nach einem der vorstehenden Ansprüche, in welcher die offene Kammer (15) ein in den Behälter (6) eingesetztes Gefäß (17) ist, wobei die Dichtungsmittel (22) zwischen dem Gefäß (17) und dem Behälter (6) angeordnet sind.

**8.** Einheit (2) zur Messung nach einem der vorstehenden Ansprüche, in welcher der Boden (11) des Behälters (6) abnehmbar ist.

**9.** Einheit (2) zur Messung nach einem der vorstehenden Ansprüche, aufweisend Einrichtungen zum Entleeren der offenen Kammer (15) der mindestens einen Einheit (2).

**10.** Einheit (2) zur Messung nach einem der vorstehenden Ansprüche, aufweisend einen außen an dem Behälter (6) bereitgestellten elektrischen Verbinder (34), der konfiguriert ist, mit einer Zentrale zur Verwertung und Behandlung der Daten zu kommunizieren.

**11.** Vorrichtung (1) zur Messung der Sedimentationsgeschwindigkeit von Partikeln in Suspension in einem Fluid einer Quelle, wobei die Vorrichtung (1) aufweist:

- mindestens eine Einheit (2) zur Messung nach einem der vorstehenden Ansprüche;
- einen automatischen Probennehmer (4) aufweisend einen Fluideingang, der in Fluidverbindung mit der Fluidquelle gebracht werden kann, und einen Fluidausgang in Fluidverbindung mit der offenen Kammer (15) des Behälters (6) der mindestens einen Einheit (2).

**12.** Vorrichtung (1) zur Messung nach dem vorstehenden Anspruch, aufweisend mehrere Einheiten (2) zur Messung.

**13.** Vorrichtung (1) zur Messung nach Anspruch 12, in welcher der Probennehmer (4) in Fluidverbindung mit der offenen Kammer (15) nur einer Einheit (2) zur Messung zur gleichen Zeit ist und Einrichtungen aufweist, um bewegt und in Fluidverbindung mit der offenen Kammer (15) mindestens einer anderen Einheit (2) zur Messung gebracht zu werden, wobei die Steuerungseinrichtungen zur Steuerung des Probennehmers (4) erlauben, das Füllen der offenen Kammer (15) der einen oder der anderen Einheit (2) zu steuern.

**14.** Vorrichtung (1) zur Messung nach Anspruch 12, in welcher der Probennehmer (4) in Fluidverbindung mit den offenen Kammern (15) mehrerer Einheiten (2) gleichzeitig ist, wobei die Steuerungseinrichtungen das gleichzeitige Füllen der offenen Kammern (15) steuern können.

**15.** Vorrichtung (1) zur Messung nach einem der Ansprüche 12 bis 14, wobei die Vorrichtung (1) einen Kasten (39) aufweist, der eine Aufnahme für die mehreren Einheiten (2) zur Messung bildet, wobei der Probennehmer (4) in Fluidverbindung mit der offenen Kammer (15) jeder der Einheiten (2) zur Messung ist.

**16.** Anwendung einer Einheit nach einem der vorstehenden Ansprüche 1 bis 10 zur Messung der Sedimentationsgeschwindigkeit von Partikeln in Suspension in einem Fluid, wobei das Fluid Wasser ist und die Partikel Sedimente sind.

**Claims**

1. Unit **(2)** for measuring the settling velocity of particles in suspension in a fluid from a source, the unit **(2)** comprising:

   - a sealed container **(6)** having an opening **(12),** the container **(6)** defining an open compartment **(15)** that comprises the opening **(9)** and a sealed compartment **(16),** sealing means **(20)** separating the open compartment **(15)** from the sealed compartment **(16),** the open compartment **(15)** being intended to contain a sample **(3)** of the fluid to be analysed;
   - means **(22)** for measuring the settling velocity of the particles of the sample **(3)** in the open compartment **(15),** said measuring means **(22)** being placed in the sealed compartment **(16)** of the container **(6),** said measuring means **(22)** being of the optical type and comprising:

      • at least three emitters **(23)** of electromagnetic radiation, the emitters **(23)** being distributed along a longitudinal axis **(L)** of the open compartment **(15),** each emitter **(23)** being oriented along a radiation axis **(R)** crossing the open compartment **(15)** at different heights along the longitudinal axis **(L)** on the open compartment **(15);**
      • receivers **(24),** the number of which is equal to the number of emitters **(23)** and which are distributed along the longitudinal axis **(L),** each receiver **(24)** being placed in the radiation axis **(R)** of an emitter **(23),** so as to receive the radiation from the corresponding emitter **(23)** after passing through the open compartment **(15);**
      • means for controlling the emitters **(23)** and the receivers **(24);**
      • a system for acquiring data connected to the receivers **(24)** for collecting the data of the measurements carried out,

   the data acquired making it possible to obtain the settling velocity of the particles and its variation as a function of the height in the open compartment **(15)** and as a function of time, said variation quantifying a flocculation of the particles.

2. Measuring unit **(2)** according to claim 1, in which the data acquired by the measuring means **(22)** are a measure of the absorbance of the radiation emitted by the emitters **(23)** and received by each receiver **(24).**

3. Measuring unit **(2)** according to claim 1 or claim 2, in which the emitters **(23)** are of the light-emitting diode type.

4. Measuring unit **(2)** according to any one of the preceding claims, in which the radiation has a wavelength comprised in the infrared.

5. Measuring unit **(2)** according to any one of the preceding claims, in which the longitudinal distance between the radiation axis **(R)** of two successive and adjacent emitters **(23)** is at most 5 cm.

6. Measuring unit **(2)** according to any one of the preceding claims, in which the longitudinal distance between the radiation axis **(R)** of two successive and adjacent emitters **(23)** is 1 cm.

7. Measuring unit **(2)** according to any one of the preceding claims, in which the open compartment **(15)** is formed by a reservoir **(17)** introduced into the container **(6),** the sealing means **(22)** being placed between the reservoir **(17)** and the container **(6).**

8. Measuring unit **(2)** according to any one of the preceding claims, in which the bottom **(11)** of the container **(6)** is detachable.

9. Measuring unit **(2)** according to any one of the preceding claims, comprising means for emptying the open compartment **(15)** of the at least one measuring unit **(2).**

10. Measuring unit **(2)** according to any one of the preceding claims, comprising an electrical connector **(34)** available on the outside of the container **(6),** capable of communicating with a data recovery and processing station.

11. Device **(1)** for measuring the settling velocity of particles in suspension in a fluid from a source, the device **(1)** comprising:

   - at least one measuring unit **(2)** according to any one of the preceding claims;

- a sampler **(4)** of the automatic type comprising a fluid inlet capable of being connected fluidically with the source of fluid and a fluid outlet connected fluidically with the open compartment **(15)** of the container **(6)** of the at least one measuring unit **(2)**.

12. Measuring device **(1)** according to the preceding claim, comprising a plurality of measuring units **(2)**.

13. Measuring device **(1)** according to claim 12, in which the sampler **(4)** is connected fluidically with the open compartment **(15)** of a measuring unit **(2)** at the same time and comprises means for moving and for fluidic connection with the open compartment **(15)** of at least one other measuring unit, the means for controlling the sampler **(4)** making it possible to control the filling of the open compartment (15) of one or other of the measuring units **(2)**.

14. Measuring device **(1)** according to claim 12, in which the sampler **(4)** is connected fluidically simultaneously with the open compartments **(15)** of several of the measuring units **(2),** and the controlling means are able to control the simultaneous filling of the open compartments **(15)**.

15. Measuring device **(1)** according to any one of claims 12 to 14, the device **(1)** comprising a tank **(39)** forming a receiver for the plurality of measuring units **(2),** the sampler **(4)** being connected fluidically with the open compartment **(15)** of each of the measuring units **(2)**.

16. Application of a measuring unit according to any one of claims 1 to 10 for measuring the settling velocity of particles in suspension in a fluid, in which the fluid is water and the particles are sediments.

FIG. 1

FIG. 2

FIG. 3a

FIG. 3b

EP 3 058 336 B1

FIG. 4

FIG. 5

FIG. 6

EP 3 058 336 B1

FIG. 7

FIG. 8

FIG. 9

clay soil

FIG. 10

FIG. 11

FIG. 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4696571 A
- US 3364812 A
- GB 2204949 A